# FASCICULE DE BREVET EUROPEEN

(11) **EP 2 668 534 B1**
(45) Date de publication et mention de la délivrance du brevet: **12.12.2018**
(21) Numéro de dépôt: 12701955.2
(22) Date de dépôt: 23.01.2012
(51) Int. Cl.: G02B 6/42

(54) **SYSTÈME DE CONNEXION POUR CÂBLE OPTIQUE**
ANSCHLUSSSYSTEM FÜR EIN OPTISCHES KABEL
CONNECTION SYSTEM FOR AN OPTICAL CABLE

(30) Priorité: 28.01.2011 FR 1150677
(43) Date de publication de la demande: 04.12.2013
(73) Titulaire: Radiall, 93100 Rosny-sous-Bois (FR)
(72) Inventeur: VAN DER MEE, Marnix, F-37270 Montlouis-sur-Loire (FR); DUPEUX, Benoit, F-38690 Oyeu (FR); VALENTIN, Roxane, 38130 ECHIROLLES (FR); DURAND, Renaud, F-38100 Grenoble (FR)
(74) Mandataire: Nony
(86) Numéro de dépôt international: PCT/IB2012/050306
(87) Numéro de publication internationale: WO 2012/101569

(56) Documents cités:
- EP-A1- 2 239 605
- EP-A2- 0 726 477
- EP-A2- 1 018 660
- WO-A1-2009/100796
- US-B1- 6 390 689
- US-B1- 7 335 033

## Description

La présente invention a pour objet une fiche du type « sur-connecteur » destinée à être montée sur au moins un câble comportant au moins un conducteur optique ainsi qu'une embase configurée pour être connectée à cette fiche.

L'invention s'applique à une fiche comportant au moins une voie optique et montée sur un câble comportant au moins un conducteur optique, une telle fiche étant par exemple utilisée dans des installations de télécommunications telles que des antennes-relais de téléphonie mobile, dans des réseaux de transmission de données à haut débit vers l'habitat ou l'industrie, des réseaux de caméras de surveillance ou encore pour la transmission de données dans des installations ferroviaires. Cette fiche montée sur un câble est communément appelée cordon optique actif (« active cable assembly »).

Il est connu d'utiliser des fiches à voie optique comportant un convertisseur optoélectronique muni de moyens de connexion tel que décrit par exemple dans la demande de brevet européen EP 0 726 477, encore appelé *transceiver* en anglais. Dans les fiches connues, le convertisseur optoélectronique est porté par une embase raccordée à une carte de circuit imprimé, comme décrit par exemple dans la demande WO 2009/100796.

Du fait de la disposition du convertisseur optoélectronique dans l'embase, la dissipation de chaleur générée dans le convertisseur optoélectronique peut ne pas être satisfaisante. En outre, une sortie du convertisseur optoélectronique est destinée à être connectée à un ou plusieurs contacts optiques portés par une fiche. La connexion entre contacts optiques et convertisseur optoélectronique peut être rendue plus difficile du fait qu'elle implique la connexion d'une embase et d'une fiche.

Par ailleurs, l'intégration du convertisseur optoélectronique à l'embase rend plus difficile l'accès manuel au dispositif de déverrouillage des contacts optiques de la fiche. Il peut alors s'avérer nécessaire d'avoir recours à un dispositif permettant de synchroniser le déverrouillage des contacts optiques et le déverrouillage de la fiche.

En outre, avec une embase comportant un convertisseur optoélectronique intégré, il peut s'avérer complexe d'obtenir un alignement satisfaisant entre l'interface électrique de la fiche et celui de l'embase, en dépit des tolérances prévues par les fabricants.

Il peut également s'avérer difficile d'adapter une embase avec convertisseur optoélectronique intégré à différents standards d'interface optique telles que des interfaces optiques utilisant des contacts LC ou SC.

Il existe un besoin pour bénéficier d'un système de connexion mettant en oeuvre un *transceiver* et remédiant à tout ou partie des inconvénients de l'art antérieur cités ci-dessus.

L'invention a pour but de répondre à ce besoin et elle y parvient, selon l'un de ses aspects, grâce à une fiche destinée à être montée sur au moins un câble comportant au moins un conducteur optique, la fiche comportant un corps et étant caractérisée par le fait qu'elle comporte au moins un convertisseur optoélectronique muni de moyens de connexion disposé dans le corps de façon amovible et interchangeable.

Le convertisseur optoélectronique est disposé de façon interchangeable dans le corps de la fiche, c'est-à-dire qu'il peut être ôté ou introduit dans le corps de la fiche sans modifier la structure du corps de la fiche et/ou le câblage du reste de la fiche.

Grâce à la disposition du convertisseur optoélectronique à l'intérieur du corps de la fiche, la dissipation de chaleur peut se faire à travers le corps de la fiche. Selon l'invention, le convertisseur optoélectronique est disposé dans la fiche avant que cette dernière ne soit connectée à une embase.

Le corps de la fiche et le convertisseur optoélectronique muni de moyens de connexion peuvent être tels que le convertisseur optoélectronique puisse être retiré et remplacé sans désolidariser la fiche du câble. La configuration du corps de la fiche et du convertisseur optoélectronique permet notamment que l'extraction et le remplacement du convertisseur optoélectronique de la fiche se fasse par l'extrémité de la fiche destinée à venir en regard de l'embase.

Un isolant électrique peut être interposé entre le corps de la fiche et le convertisseur optoélectronique lorsque ce dernier est disposé dans la fiche. De cette façon, le boîtier du convertisseur optoélectronique et le corps de la fiche ne sont pas au même potentiel, ce qui peut permettre de protéger le convertisseur optoélectronique, par exemple lorsque la foudre tombe sur la fiche.

La fiche peut comporter au moins un contact optique dont une extrémité est connectée à un conducteur optique du câble et dont une autre extrémité est connectée au convertisseur optoélectronique. Avec une telle fiche, la connexion de contact(s) optique(s), par exemple de contact(s) LC, au convertisseur optoélectronique, qui peut être relativement contraignante, est effectuée au sein de la fiche, sans connexion de celle-ci à une embase. Le convertisseur optoélectronique peut ainsi être relié au(x) contact(s) optique(s) avec plus d'aisance pour l'opérateur.

Le convertisseur optoélectronique peut être un transceiver de type SFP (« small form factor pluggable » tel que défini par le comité SFF selon le lien ftp://ftp.seagate.com/sff/INF-8074.PDF).

La disposition du convertisseur optoélectronique dans la fiche peut être telle que la connexion de la fiche à une embase se fasse par connexion d'une sortie du convertisseur optoélectronique à un élément de l'embase.

Le corps de la fiche peut comporter un fond et un couvercle monté de façon amovible sur le fond. Le caractère amovible du couvercle peut permettre un accès aisé au convertisseur optoélectronique, ce qui peut faciliter l'introduction du convertisseur optoélectronique dans le corps et/ou son remplacement ainsi que sa connexion au(x) contact(s) optique(s). Le couvercle peut être opaque. Dans des exemples préférés de mise en oeuvre de l'invention, le couvercle est réalisé en métal, pour des raisons de blindage électromagnétique.

Le couvercle et le fond du corps peuvent comporter des moyens de maintien en position fixe, au moins selon une direction, voire seulement selon une direction, du convertisseur optoélectronique dans le corps de la fiche, une fois que le couvercle et le fond sont assemblés. Des décrochements ou encoches ménagés dans le couvercle et/ou le fond coopèrent par exemple avec des décrochements complémentaires ou des nervures du convertisseur optoélectronique dans ce but.

Le corps peut présenter en section transversale une forme circulaire, rectangulaire ou autre. La section transversale du corps peut être constante ou varier le long de l'axe longitudinal du corps.

Selon un premier exemple de mise en oeuvre de l'invention, le corps comporte un unique logement dans lequel est disposé le convertisseur optoélectronique. Selon cet exemple, la fiche peut être configurée pour être montée sur un unique câble comportant un ou plusieurs conducteurs optiques.

Selon un deuxième exemple de mise en oeuvre de l'invention, le corps comporte au moins un premier logement dans lequel est reçu le convertisseur optoélectronique et au moins un deuxième logement dans lequel est reçu au moins un contact autre qu'optique, notamment un contact de puissance. Le contact autre qu'optique peut être un contact de signal, par exemple un multi-contact de type Ethernet RJ 45 ou USB ou un contact de puissance, notamment un contact comprenant deux conducteurs de cuivre, ayant par exemple une section de 2,5 mm² au potentiel positif et négatif.

Le premier et le deuxième logements peuvent être séparés par une paroi assurant un blindage électromagnétique entre les deux logements. Une telle paroi peut garantir qu'à l'intérieur du corps de la fiche des signaux différents soient véhiculés sans interférence de l'un par rapport à l'autre.

Selon ce deuxième exemple de mise en oeuvre de l'invention, le corps est configuré pour être monté sur un câble optique et sur un câble autre qu'optique, notamment un câble de puissance, respectivement connectés au(x) contact(s) optique(s) et au(x) contact(s) autre(s) qu'optique de la fiche, notamment au(x) contact(s) de puissance.

Le corps peut ainsi comporter à une extrémité deux trous permettant le passage du câble optique et du câble autre qu'optique, notamment du câble de puissance. On désignera par la suite par « câble optique » ou « câble purement optique » un câble n'ayant que des conducteurs optiques, par exemple des fibres optiques, et par « câble autre qu'optique » un câble dépourvu de contact optique.

Selon un troisième exemple de mise en oeuvre de l'invention, le corps comporte un unique logement à l'intérieur duquel est disposée une cartouche portant le convertisseur optoélectronique et au moins un contact autre qu'optique, notamment un contact de puissance. La cartouche est par exemple une pièce s'étendant selon un axe longitudinal et comportant une surface latérale ajourée entre deux extrémités longitudinales de forme tubulaire à travers lesquelles des passages sont définis pour recevoir le convertisseur optoélectronique et un ou plusieurs contacts autres qu'optiques, notamment de puissance. La cartouche peut être réalisée en un matériau électriquement isolant.

Les passages peuvent être disposés de manière à ce que les voies optiques et autres, notamment de puissance, soient superposées selon l'axe longitudinal de la cartouche sur toute ou partie de la longueur de celle-ci.

Selon ce troisième exemple de mise en oeuvre de l'invention, la fiche peut être configurée pour être montée sur un câble hybride, c'est-à-dire au sens de l'invention un câble comportant au moins un conducteur optique et au moins un conducteur autre qu'optique, notamment un conducteur de puissance.

L'invention a encore pour objet, selon un autre de ses aspects, un ensemble de fiches, caractérisé par le fait qu'il comporte :
- une première fiche dont le corps comporte un unique logement dans lequel est disposé un convertisseur optoélectronique et,
- une deuxième fiche autre qu'optique, notamment une fiche de puissance, ladite deuxième fiche comportant un deuxième corps et au moins un contact autre qu'optique, notamment un contact de puissance, le deuxième corps et le corps de la première fiche étant sensiblement de mêmes dimensions.

La première fiche est par exemple une fiche purement optique tandis que la deuxième fiche est une fiche purement de puissance, c'est-à-dire avec seulement des contacts de puissance.

Des moyens peuvent être prévus pour solidariser de façon permanente ou non les deux fiches entre elles, ces moyens étant par exemple portés par le corps de chaque fiche et coopérant entre eux. Ces moyens peuvent être portés par chaque fiche, par exemple des pattes d'encliquetage. En variante, il peut s'agir d'un collier de serrage disposé autour des deux fiches.

Une fois solidarisés, les deux fiches peuvent être connectées en une seule opération à une ou plusieurs embases.

Grâce à la diversité des fiches ci-dessus, l'invention peut offrir une grande modularité aux utilisateurs, permettant de s'adapter à l'évolution de leurs besoins.

La deuxième fiche autre qu'optique peut être utilisée indépendamment de la première fiche, n'étant pas limitée à être associée à la première fiche.

L'invention a encore pour objet, selon un autre de ses aspects, une embase configurée pour être connectée à la fiche ci-dessus, l'embase étant caractérisée par le fait qu'elle comporte :
- au moins une sous-embase apte à être raccordée à, notamment montée sur, la carte de circuit électronique d'un équipement électronique et configurée pour être connectée au convertisseur optoélectronique de la fiche, et
- un système de verrouillage de l'embase sur la fiche, ce système étant distinct de la sous-embase.

La réalisation sous forme d'éléments distincts de la sous-embase et du système de verrouillage permet un alignement satisfaisant de l'interface électrique de l'embase et de l'interface électrique de la fiche formée par le convertisseur optoélectronique disposé dans la fiche. Le système de verrouillage est par exemple porté par un panneau tandis que la sous-embase n'est pas montée sur ce panneau.

La fiche peut être connectée à l'embase en déplaçant la fiche ou l'embase selon un axe et le système de verrouillage peut permettre de réaliser un alignement de l'interface électrique de l'embase et de l'interface électrique de la fiche selon une dimension mesurée parallèlement audit axe tandis que la sous-embase peut permettre de réaliser un alignement de l'interface électrique de l'embase et de l'interface électrique de la fiche dans un plan perpendiculaire audit axe.

La sous-embase peut être disposée en regard d'une ouverture ménagée dans un panneau, l'ouverture pouvant permettre l'accès à la sous-embase au travers du panneau. Le panneau fait par exemple partie d'un équipement électronique.

Le système de verrouillage peut comporter un rebord faisant saillie par rapport au panneau et délimitant extérieurement l'ouverture. Ce rebord peut être formé d'une seule pièce avec le panneau ou, en variante, être formé par une pièce rapportée sur le panneau.

Le système de verrouillage peut comporter au moins un moyen de verrouillage amovible sur la fiche, ledit moyen de verrouillage amovible étant porté par le rebord. Ce moyen de verrouillage peut être rapporté sur le rebord. Le rebord peut porter au moins une languette réalisée en un matériau électriquement conducteur, cette languette étant configurée pour venir au contact du corps de la fiche. Une telle languette peut permettre d'établir une continuité de potentiel électrique entre le corps de la fiche et le panneau.

L'embase peut comporter une sous-embase configurée pour être connectée à au moins un contact autre qu'optique, notamment un contact de puissance.

En variante, en plus de l'embase comportant une sous-embase configurée pour être connectée au convertisseur optoélectronique de la fiche, au moins une deuxième embase peut être prévue. La deuxième embase peut comporter une sous-embase configurée pour être connectée à au moins un contact autre qu'optique, notamment un contact de puissance.

Le panneau peut comporter au moins une deuxième ouverture permettant l'accès à la sous-embase de la deuxième embase au travers du panneau, cette ouverture étant de préférence disposée en regard de ladite sous-embase. En variante l'accès à cette sous-embase peut être effectué grâce à la même ouverture que celle décrite ci-dessus, aucune ouverture additionnelle n'étant ménagée dans le panneau pour la deuxième embase.

Lorsque plusieurs ouvertures sont ménagées dans le panneau et disposées en regard de chaque sous-embase, ces ouvertures peuvent présenter sensiblement les mêmes dimensions.

En variante encore, le panneau ne comporte qu'une seule ouverture pour la connexion au convertisseur optoélectronique de la fiche et un autre panneau avec une ouverture pour une embase permettant la connexion à une fiche véhiculant un signal autre qu'optique, notamment de puissance, peut être prévu. Des moyens peuvent être prévus pour solidariser, de façon permanente ou non, ces deux panneaux.

Les exemples décrits ci-dessus permettent de réaliser grâce à l'invention une grande variété de connexions en mettant en oeuvre plusieurs types de signaux ou non.

Fiche(s) et embase(s) telles que décrites ci-dessus peuvent être configurées de manière à ce que pour un couple fiche-embase donné, des moyens réalisant un blindage électromagnétique soient prévus, ces moyens permettant une mise à la masse du corps de la fiche, du boîtier du convertisseur optoélectronique, du panneau, d'une tresse du ou des câbles sur le(s)quel(s) la fiche est montée et de la sous-embase connectée au convertisseur optoélectronique.

Dans une variante, comme déjà mentionné, le convertisseur optoélectronique est électriquement isolé par rapport au corps de la fiche et le boîtier du convertisseur optoélectronique est au même potentiel que la sous-embase tandis que le corps de la fiche et le panneau sont au même potentiel.

L'invention a encore pour objet, selon un autre de ses aspects un système de connexion comportant :
- une fiche avec un convertisseur optoélectronique telle que définie ci-dessus et,
- une embase configurée pour être connectée à la fiche et associée à un panneau, l'embase étant telle que définie ci-dessus,
l'embase et la fiche étant configurées de telle sorte que lorsque la fiche et l'embase sont connectées, le convertisseur optoélectronique reste au moins partiellement du côté du panneau dans lequel s'étend la majeure partie de la fiche, ce qui signifie que lors de l'opération de connexion de la fiche à l'embase, le convertisseur optoélectronique n'a pas ou que très peu pénétré dans une ouverture ménagée dans le panneau en vue de sa connexion à la sous-embase. Une telle disposition permet que la chaleur générée par le convertisseur optoélectronique en fonctionnement soit dissipée à l'extérieur du panneau et non à l'intérieur de celle-ci.

Cette disposition relative du convertisseur optoélectronique et du panneau, après connexion de la fiche à l'embase, peut être obtenue grâce à la distance suffisante entre l'extrémité du corps de la fiche en regard de l'embase et la position du convertisseur optoélectronique dans la fiche et/ou grâce au réglage du système de verrouillage de l'embase pour bloquer selon l'axe d'introduction de la fiche dans l'embase la fiche par rapport à l'embase.

L'invention a encore pour objet, selon un autre de ses aspects un procédé de connexion d'une fiche ci-dessus à une embase ci-dessus, dans lequel :
- on introduit selon un axe la fiche au moins partiellement dans l'ouverture d'un panneau portant le système de verrouillage de l'embase,
- on aligne l'interface électrique de la fiche et l'interface électrique de l'embase selon une dimension mesurée parallèlement audit axe à l'aide du système de verrouillage de l'embase et,
- on aligne l'interface électrique de la fiche et l'interface électrique de l'embase dans un plan perpendiculaire audit axe à l'aide de la sous-embase de l'embase configurée pour être connectée au convertisseur optoélectronique.

Les deux alignements mentionnés ci-dessus peuvent être effectués simultanément ou non.

La sous-embase comporte par exemple une cage ayant dans un plan perpendiculaire audit axe des dimensions ajustées à celles dans le même plan du convertisseur optoélectronique.

L'alignement dans le plan perpendiculaire audit axe peut être rendu possible à l'aide de chanfreins portés par la cage et/ou l'extrémité du corps de la fiche en regard de l'embase et/ou le boîtier du convertisseur optoélectronique. Le système de verrouillage comporte par exemple une pièce de verrouillage permettant un blocage selon ledit axe de la fiche par rapport à l'embase et aucun déplacement de la fiche par rapport à l'embase dans le plan perpendiculaire audit axe de la fiche peut n'être permis une fois le blocage selon ledit axe obtenu, auquel cas les deux alignements ci-dessus interviennent simultanément.

La pièce de verrouillage peut être configurée pour permettre un blocage selon ledit axe tout en compensant des mésalignements entre fiche et embase dans le plan perpendiculaire audit axe.

En variante, l'alignement dans le plan perpendiculaire audit axe est obtenu par déplacement direct du convertisseur optoélectronique, ce dernier étant reçu de façon flottante, au moins perpendiculairement audit axe, dans le corps de la fiche.

D'autres moyens permettant d'obtenir cet alignement dans un plan perpendiculaire audit axe de l'interface électrique de la fiche et de l'interface électrique de l'embase, la fiche étant bloquée selon ledit axe par rapport à l'embase, sont possibles, par exemple ceux décrits dans la demande déposée en France sous le n° 09 59137 et permettant un positionnement préalable de l'embase par rapport au panneau, tel que le bouchon qui y est décrit.

L'invention pourra être mieux comprise à la lecture de la description qui va suivre d'exemples non limitatifs de mise en oeuvre de celle-ci et à l'examen du dessin annexé sur lequel :
- les figures 1 à 3 représentent un premier exemple de mise en oeuvre de l'invention, la figure 1 représentant une fiche et un équipement électronique selon ce premier exemple de mise en oeuvre, la figure 2 étant une vue en coupe selon II-II de la figure 1 et la figure 3 représentant de façon isolée la fiche de la figure 1,
- les figures 4 à 6 représentent un deuxième exemple de mise en oeuvre de l'invention, la figure 4 étant similaire à la figure 1, la figure 5 étant similaire à la figure 3 et la figure 6 représentant de façon isolée l'embase de la figure 4,
- les figures 7 et 8 représentent de façon schématique une fiche et un équipement électronique similaires à ceux représentés aux figures 1 à 3 et adaptés à la transmission d'un signal de puissance,
- la figure 9 représente de façon schématique une variante des figures 1 et 4,
- les figures 10 à 13 représentent un autre exemple de mise en oeuvre de l'invention, la figure 10 représentant de façon partielle une fiche, la figure 11 représentant une embase destinée à être connectée à la fiche de la figure 10 et les figures 12 et 13 étant des vues en coupe de la fiche de la figure 10 et de l'embase de la figure 11 et,
- les figures 14 à 17 représentent deux autres exemples de fiche selon l'invention, les figures 15 et 17 étant respectivement des vues en coupe selon XV-XV et XVII-XVII des figures 14 et 16.

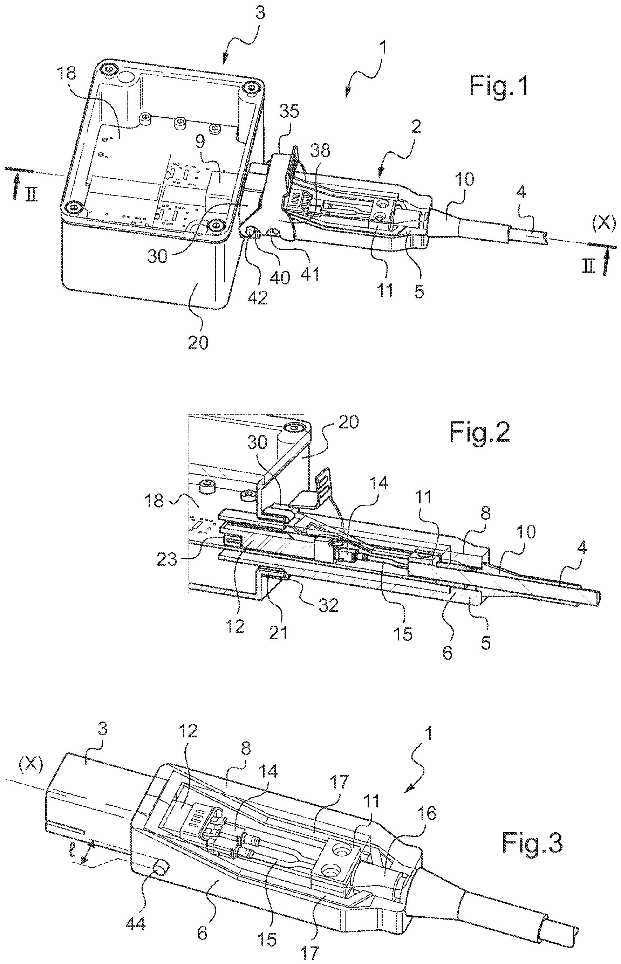

On a représenté sur la figure 1 un système de connexion désigné globalement par 1 et configuré pour transmettre un signal optique. Ce système 1 comporte une fiche désignée globalement par 2 et une embase qui permet la connexion de la fiche à un équipement électronique désigné globalement par 3.

Comme on peut le voir sur les figures 1 à 3, la fiche 2 peut être configurée pour être montée sur un unique câble 4 qui peut ne comporter que des conducteurs optiques. La fiche 2 comporte un corps désigné globalement par 5 qui peut être réalisé en plusieurs pièces. Le corps 5 s'étend dans l'exemple considéré selon un axe longitudinal rectiligne X.

Le corps 5 comporte par exemple un fond 6 et un couvercle 8 destiné à être mis en place de façon amovible sur le fond 6. Les formes du fond 6 et du couvercle 8 peuvent être complémentaires. Le corps 6 et le couvercle 8 peuvent être réalisés dans le même matériau, par exemple en aluminium moulé sous pression, en zamac revêtu de zinc-nickel ou encore en matière(s) plastique(s), avec ou sans métallisation.

Le corps peut comporter une extrémité avant 9 destinée à être introduite à l'intérieur de l'équipement électronique 3 et ayant une forme de bec. Cette extrémité avant 9 peut présenter une dimension transversale inférieure à celle du reste du corps 5, indépendamment de sa forme.

Le montage de la fiche 2 sur le câble 4 peut être facilité par une pièce 10 destinée à être disposée sur l'extrémité arrière de la fiche 2. Cette pièce 10 est par exemple un presse-étoupe de rétention du câble 4 ou un manchon flexible configuré pour accompagner la courbure du câble 4.

Comme on peut le voir sur les figures 1 à 3, un unique logement peut être défini dans le corps 5. Une pièce 11 assurant le maintien du câble 4 dans le logement du corps 5 et un convertisseur optoélectronique 12, encore appelé *transceiver* en anglais, peuvent être disposés dans ce logement. Le *transceiver* 12 est par exemple disposé dans le logement au niveau de l'extrémité avant 9 du corps 5. Dans l'exemple illustré, le convertisseur optoélectronique est au contact du corps 5 de la fiche, de telle sorte que le boîtier de ce convertisseur optoélectronique est au même potentiel électrique que le corps 5 de la fiche 5.

Un ou plusieurs contacts optiques 14 peuvent être reliés à une extrémité à un conducteur optique 15, notamment une fibre optique, du câble 4 et être connectés à leur autre extrémité à une entrée du *transceiver* 12. Les contacts optiques 14 sont par exemple des contacts de type LC et le convertisseur optoélectronique 12 est par exemple un transceiver de type SFP.

Comme représenté sur les figures 1 à 3, un joint d'étanchéité 16 peut être disposé dans le logement ménagé dans le corps 5. Ce joint 16 peut comporter deux branches 17 dont deux extrémités se rejoignent et viennent au contact d'une tresse de blindage du câble 4. Les autres extrémités des deux branches 17 sont reliées entre elles sensiblement au-dessus du convertisseur optoélectronique 12.

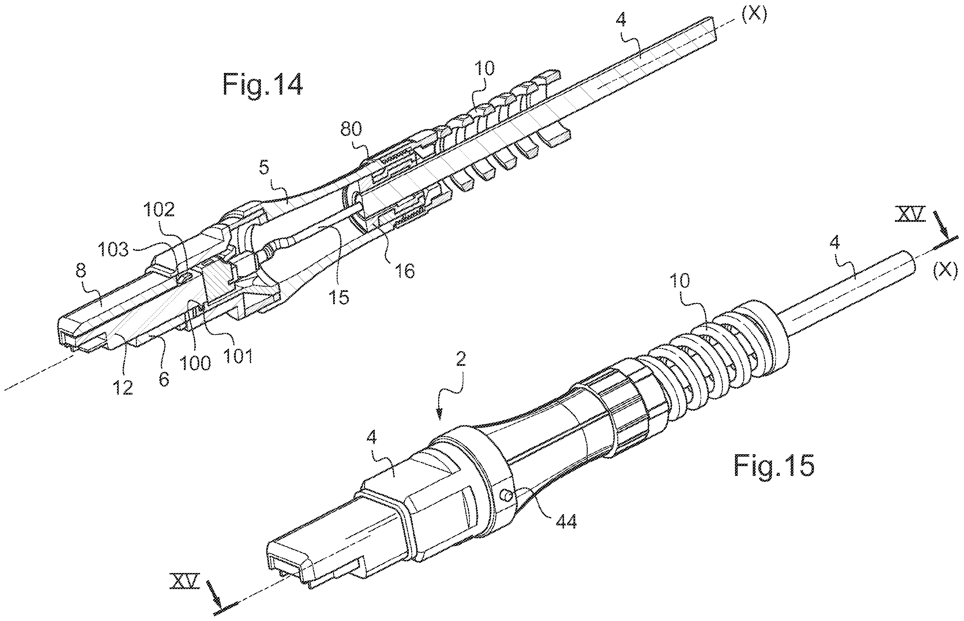

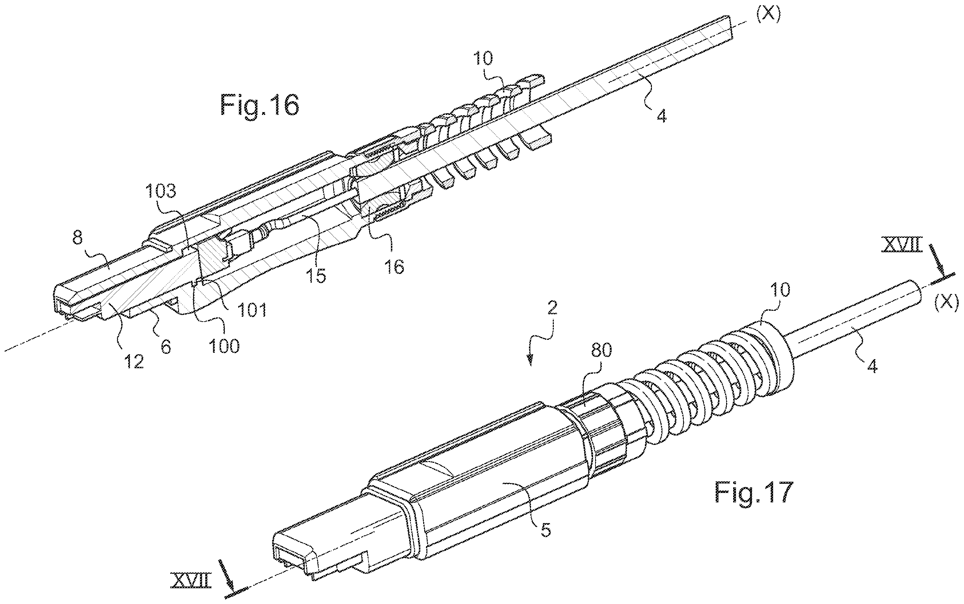

D'autres exemples de joint d'étanchéité 16 sont représentés sur les figures 15 et 17. Ces figures représentent également d'autres exemples de fiche 2 avec un presse-étoupe 10.

L'assemblage de la fiche 2 qui vient d'être décrite peut être effectué comme suit : le couvercle 8 étant ôté, le convertisseur optoélectronique 12 peut être introduit dans le logement du corps 5 et les contacts 14 peuvent être montés sur les conducteurs 15 du câble 4. La connexion des contacts 14 à une entrée du convertisseur optoélectronique 12 peut ensuite être effectuée, puis le couvercle 8 peut être remis en place sur le fond 6. Des moyens de maintien du convertisseur optoélectronique 12 dans une position fixe, au moins selon la dimension mesurée le long de l'axe X de la fiche 2, peuvent être prévus. Ces moyens comprennent par exemple au moins, comme représenté sur les figures 15 et 17, une encoche 100 ménagée dans le fond 6 du corps 5 et une nervure 101 portée par le convertisseur optoélectronique 12. Un picot 102 peut être porté par le convertisseur optoélectronique 12 pour venir en butée contre un décrochement 103 ménagé dans la paroi intérieure du couvercle 8 du corps 5.

L'embase permet la connexion à l'équipement électronique 3. Cette embase comporte une sous-embase 23 configurée pour être connectée au convertisseur optoélectronique 12. Il s'agit par exemple d'une sous-embase de type SFP. Cette sous-embase 23 est par exemple montée, notamment par soudure, sur une carte de circuit électronique 18 disposée dans l'équipement électronique 3 ou, en variante, est simplement raccordée à cette carte de circuit électronique 18.

L'embase est représentée plus en détails sur la figure 2. Comme on peut le voir, l'équipement électronique 3 comporte un panneau 20 dans lequel est ménagée une ouverture 21. Un rebord 30 peut délimiter extérieurement l'ouverture 21. Ce rebord 30 peut faire saillie vers l'extérieur de l'équipement électronique 3 et être réalisé d'une seule pièce avec le panneau 20 ou, en variante et comme on le verra par la suite, être formé par une pièce rapportée sur le panneau 20.

Comme on peut le voir sur la figure 2, une ou plusieurs languettes 32 peuvent être portées par le rebord 30. Ces languettes peuvent ne s'étendre que sur la face du rebord 30 en regard de l'ouverture ou également sur l'autre face de ce rebord 30. Ces languettes 32 peuvent être réalisées en métal, constituant alors des bracelets de masse qui peuvent permettre d'établir une continuité électrique entre le corps 5 de la fiche 2 et le panneau 20.

Comme représenté sur les figures 1 et 2, l'embase comporte un système de verrouillage sur la fiche 2. Ce système de verrouillage peut comprendre une pièce de fixation amovible 35 de l'embase sur la fiche 2. Cette pièce 35 est par exemple réalisée en métal et peut présenter en section une forme en U. La pièce 35 peut être déplacée en rotation autour d'un axe perpendiculaire à l'axe de l'ouverture 21, ce dernier étant dans l'exemple considéré parallèle à l'axe X une fois la fiche 2 connectée à l'embase.

La pièce 35 comporte par exemple deux parois latérales 38 dans lesquelles deux encoches 40 et 41 sont ménagées. L'encoche 40 est dans l'exemple illustré configurée pour coopérer avec un picot 42 ménagé sur la face extérieure du rebord 30, assurant la fixation de la pièce 35 sur le rebord 30 et ainsi sur le panneau 20, tandis que l'encoche 41 est configurée pour coopérer avec un picot 44 ménagé sur une paroi latérale du corps 5, par exemple une paroi latérale du fond 6 du corps 5. Ce système de verrouillage permet un blocage selon l'axe X de la fiche par rapport à l'embase.

Dans l'exemple représenté un tel blocage est obtenu lorsque les picots 42 et 44 sont reçus dans les encoches 40 et 41. Chacun des picots 44 du corps 5 de la fiche 2 peut s'étendre perpendiculairement à l'axe X sur une longueur 1 telle que la fiche 2 puisse être bloquée par rapport à l'embase selon l'axe X tout en compensant des mésalignements dans le plan perpendiculaire à l'axe X puisque la longueur 1 des picots 44 leur permet de rester dans les encoches 41 malgré ce mésalignement.

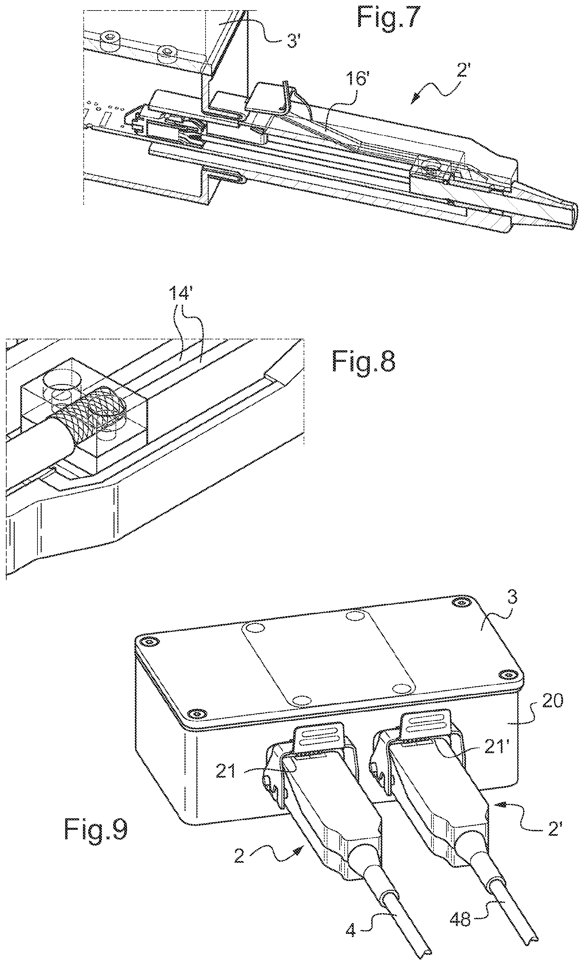

Le système 1 décrit en référence aux figures 1 à 3 ne permet qu'une connexion purement optique. Néanmoins, le système selon l'invention peut être utilisé pour transmettre d'autres types de signaux, comme cela va être décrit en référence aux figures 7 et 8. Ces dernières représentent un équipement électronique 3' et une fiche 2' ne différant de ceux décrits en référence aux figures 1 à 3 que par le fait que le signal transmis est autre qu'optique, étant par exemple un signal de puissance ou autre. La fiche 2' représentée à la figure 8 peut ne différer de celle des figures 1 à 3 que par l'absence de convertisseur optoélectronique 12 et le remplacement des contacts optiques 14 par des contacts 14' autres qu'optiques, notamment de puissance. Comme on peut le voir, un joint d'étanchéité 16' similaire à celui décrit en référence aux figures 1 à 3 peut être prévu.

La figure 9 représente une variante selon laquelle une fiche 2 telle que décrite en référence aux figures 1 à 3 et une fiche 2' selon les figures 7 et 8 sont toutes deux connectées à un même équipement électronique 3. Le panneau 20 de l'équipement électronique 3 comporte par exemple deux ouvertures 21 et 21', chacune étant associée à une embase. L'ouverture 21 est par exemple associée à une embase ayant une sous-embase 23 configurée pour être connectée au convertisseur optoélectronique 12 de la fiche 2 tandis que l'autre ouverture 21' est associée à une embase ayant une sous-embase configurée pour être connectée au(x) contact(s) autre(s) qu'optique(s) de la fiche 2'.

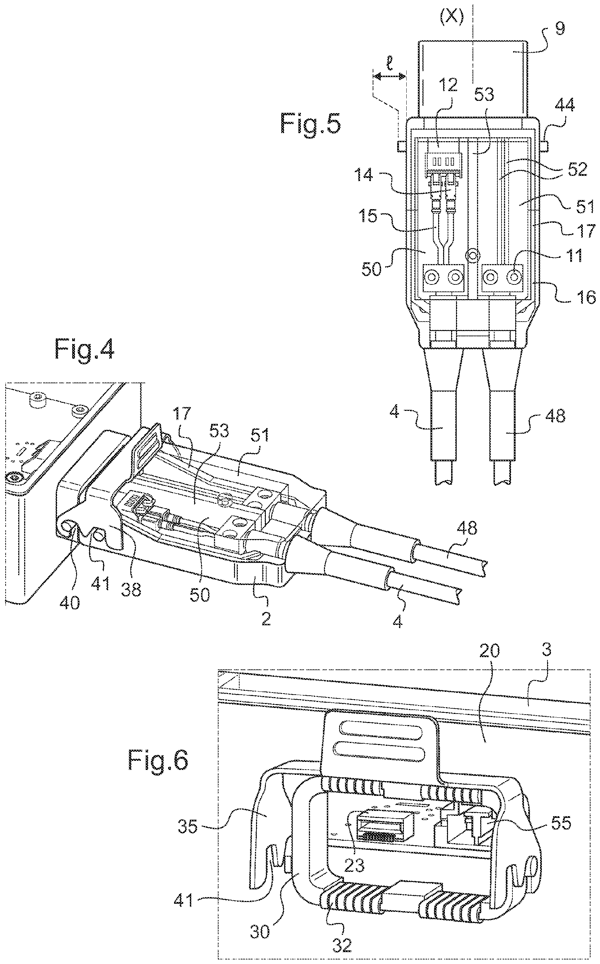

On va maintenant décrire en référence aux figures 4 à 6 un autre exemple de mise en oeuvre de l'invention. Dans cet exemple, la fiche 2 et l'équipement électronique 3 sont hybrides et non plus purement optiques, comme dans l'exemple des figures 1 à 3, c'est-à-dire qu'ils véhiculent un ou plusieurs autres signaux que des signaux optiques.

Comme on peut le voir sur la figure 4, la fiche 2 est selon cet exemple configurée pour être montée à la fois sur un câble 4 avec des conducteurs optiques 15, comme précédemment, et sur un câble 48 autre qu'optique, par exemple un câble de puissance.

Deux logements 50 et 51 peuvent être formés à l'intérieur du corps 5, chacun de ces logements pouvant alors s'étendre sur sensiblement toute la longueur du corps 5. Le logement 50 reçoit des contacts optiques 14 et le convertisseur optoélectronique 12, similairement au logement décrit en référence aux figures 1 à 3. Le logement 51 reçoit des contacts 52 autres qu'optiques montés sur des conducteurs du câble 48, qui sont dans l'exemple décrit des contacts de puissance.

Comme on peut le voir sur les figures 4 et 5, ces deux logements 50 et 51 peuvent être séparés par une paroi 53. Cette paroi peut être configurée pour assurer un blindage électromagnétique entre les logements 50 et 51, de manière à ce que les signaux transmis depuis les câbles 4 et 48 n'interfèrent pas les uns les autres. Cette paroi 53 est par exemple réalisée en aluminium ou en zamac.

Comme représenté sur la figure 6, l'embase permettant la connexion à l'équipement électronique 3 peut alors comporter à la fois une sous-embase 23 telle que décrite précédemment, permettant la connexion au convertisseur optoélectronique 12 et une deuxième sous-embase 55, configurée pour être connectée au(x) contact(s) 52 autre(s) qu'optique, qui sont dans cet exemple des contacts de puissance. Dans l'exemple de la figure 6, la seule ouverture 21 ménagée dans le panneau 20 permet la connexion de la fiche hybride aux sous-embases 23 et 55.

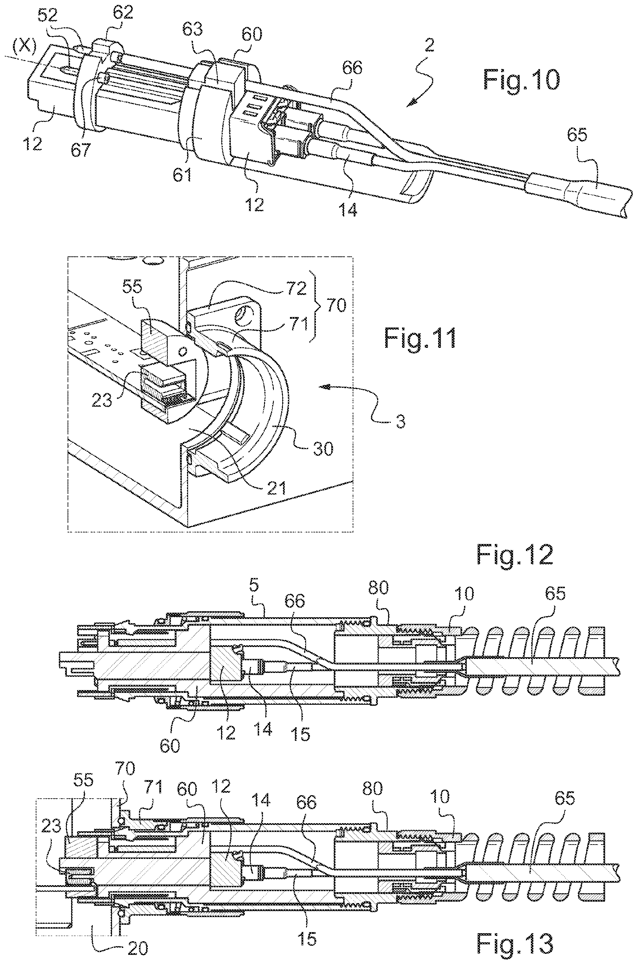

On va décrire en référence aux figures 10 à 13 une fiche 2 et un équipement électronique 3 selon un autre exemple de mise en oeuvre de l'invention. Il s'agit ici d'une fiche hybride, véhiculant un ou plusieurs signaux optiques et des signaux d'autres types, par exemple des signaux de puissance. La fiche 2 est selon cet exemple configurée pour être montée sur un câble hybride 65 comportant à la fois des conducteurs optiques 15 tels que des fibres optiques et des conducteurs non optiques 66, par exemple de puissance.

Comme on peut le voir sur la figure 10 sur laquelle le corps 5 de la fiche n'a pas été représenté, la fiche 2 peut comporter une cartouche 60 s'étendant longitudinalement selon l'axe X du corps et comportant entre ses deux extrémités longitudinales 61 et 62 une surface ajourée. Cette cartouche peut être réalisée en matière plastique, de telle sorte que le boîtier du convertisseur optoélectronique 12 et le corps 5 de la fiche 2 ne sont pas au même potentiel électrique.

Les extrémités longitudinales 61 et 62 de la cartouche 60 peuvent être pourvues de passages pour des voies optiques et autres, par exemple, de puissance.

L'extrémité 61 est par exemple de forme extérieure sensiblement cylindrique et peut comporter deux cavités 63 permettant chacune le passage d'un conducteur de puissance 66 du câble hybride 65. Un logement peut être ménagé dans cette extrémité 61 pour recevoir une extrémité du convertisseur optoélectronique 12.

Des cavités 67 peuvent également être ménagées dans l'autre extrémité longitudinale 62 de la cartouche 60, ces cavités 67 permettant de recevoir des contacts autres qu'optiques, par exemple des contacts de puissance 52 raccordés aux conducteurs de puissance 66 du câble hybride 65. Un logement peut également être ménagé dans l'extrémité 62 pour recevoir une autre extrémité du convertisseur optoélectronique 12.

La fiche décrite en référence à la figure 10 est configurée pour être connectée à une embase représentée à la figure 11. Celle-ci permet la connexion à un équipement électronique 3 comportant un panneau 20 portant un rebord 30. Le rebord 30 est ici formé par une pièce 70 rapportée sur le panneau 20. Le rebord 30 comporte par exemple une portion tubulaire 71 et une platine de fixation 72. Cette pièce 70 est disposée autour d'une ouverture 21 en regard d'une sous-embase 23, similaire à celle qui a été décrite précédemment, et d'une sous-embase 55 configurée pour être connectée au(x) contact(s) de puissance 52 de la fiche 2.

La fiche 2 comporte encore dans l'exemple des figures 10 à 13 un écrou 80 et un presse-étoupe 10. L'écrou et le presse étoupe peuvent par exemple être tels que décrits dans la demande EP 2 239 605 dont le contenu est incorporé par référence à la présente demande ou tels que décrits dans la demande déposée en France sous le n° 09 59137 dont le contenu est également incorporé à la présente demande par référence.

La fiche 2 des exemples des figures 10 à 13 peut être assemblée comme suit.

Le convertisseur optoélectronique 12 est introduit dans la cartouche 60 à l'intérieur des logements ménagés dans chaque extrémité longitudinale 61 et 62. Les contacts de puissance 52 sont disposés dans chacune des cavités 67 ménagées dans l'extrémité 62 de la cartouche 60. Les contacts optiques 14 sont connectés à une entrée du convertisseur optoélectronique 12.

La cartouche 60 est alors introduite dans le corps 5 de la fiche 2 et l'écrou 80 est vissé sur l'extrémité arrière du corps 5 de façon à emprisonner la cartouche 60 à l'intérieur du corps 5. Le presse-étoupe 10 est alors monté sur l'arrière de l'écrou 80.

La fiche 2 ainsi assemblée peut alors être connectée aux sous-embases 23 et 55 après traversée de l'ouverture 21 du panneau 20.

Comme expliqué ci-dessus, l'invention permet que le convertisseur optoélectronique 12 soit connecté au(x) conducteur(s) optique(s) 15 d'un câble par l'intermédiaire de contact(s) optique(s) 14 avant la connexion de la fiche 2 à une embase permettant la connexion à l'équipement électronique 3.

L'invention peut permettre d'obtenir un système de connexion d'un câble à une embase présentant un blindage électromagnétique et mécanique satisfaisant. La tresse du câble peut être au moins partiellement dénudée et mise au contact du corps 5 de la fiche 2. Le presse-étoupe 10 des figures ci-dessus est avantageusement configuré pour permettre un tel contact électrique entre tresse du câble et corps de la fiche.

Dans l'ensemble des exemples qui viennent d'être décrits, une fois la fiche 2 et l'embase connectées, le convertisseur optoélectronique est au moins en partie située à l'extérieur de l'équipement électronique 3, étant en tout ou partie du côté du panneau 20 dans lequel s'étend la majeure partie de la fiche 2, comme on peut le voir notamment sur les figures 2, 4 et 14.

L'alignement de l'interface électrique de l'embase et de l'interface électrique de la fiche 2, c'est-à-dire dans les exemples ci-dessus du convertisseur optoélectronique 12 et de la sous-embase 23 peut se faire en une seule étape. Après que la fiche a été déplacée selon l'axe X vers l'ouverture 21, le moyen de verrouillage 35 est rabattu, de manière à ce que les picots 44 soient reçus dans les encoches 41, permettant ainsi de bloquer la fiche 2 par rapport à l'embase selon l'axe X. Simultanément, un alignement du convertisseur optoélectronique 12 et de la sous-embase 23 perpendiculairement à l'axe X peut avoir lieu grâce à des chanfreins portés par la sous-embase 23 et/ou par l'extrémité 9 du corps 5 de la fiche 2 et/ou par l'extrémité avant du boîtier du convertisseur optoélectronique 12. Cet alignement est par exemple effectué par déplacement du corps 5 de la fiche 2 ou directement par déplacement du convertisseur optoélectronique 12.

La fiche et/ou l'embase obtenue(s) conformément à tout ou partie des différents exemples décrits ci-dessus peu(ven)t être configurée(s) pour fonctionner à des températures comprise entre -40°C et +125°C.

En termes d'étanchéité, la fiche et/ou l'embase peuvent satisfaire la norme IP65, IP 67 ou IP68.

L'opération de connexion et déconnexion de fiche (s) et d'embase (s) décrits ci-dessus peut être particulièrement simple.

Fiche(s) et embase(s) telles que décrites ci-dessus peuvent permettre d'établir un grand nombre de connexion sur une surface de panneau réduite, permettant ainsi d'obtenir une haute densité de connexion.

L'invention n'est pas limitée aux exemples qui viennent d'être décrits.

L'expression « comportant un » doit être comprise comme signifiant « comportant au moins un », sauf lorsque le contraire est spécifié.

## Revendications

1. Fiche (2) destinée à être connectée à une embase (3) permettant la connexion à un équipement électronique (3) et destinée à être montée sur au moins un câble (4) comportant au moins un conducteur optique (15), la fiche (2) comportant un corps (5) et étant **caractérisée par le fait qu'**elle comporte au moins un convertisseur optoélectronique muni de moyens de connexion (12), disposé dans le corps (5) de façon amovible et interchangeable, tel qu'il peut être ôté ou introduit dans le corps de la fiche sans modifier la structure du corps de la fiche et/ou le câblage du reste de la fiche.

2. Fiche selon la revendication 1, **caractérisée par le fait qu'**elle comporte au moins un contact optique (14) dont une extrémité est connectée à un conducteur optique (15) du câble (4) et dont une autre extrémité est connectée au convertisseur optoélectronique (12).

3. Fiche selon l'une des revendications 1 ou 2, **caractérisée par le fait que** le corps (5) comporte au moins un premier logement (50) dans lequel est reçu le convertisseur optoélectronique (12) et au moins un deuxième logement (51) dans lequel est reçu au moins un contact (52) autre qu'optique, notamment un contact de puissance.

4. Fiche selon la revendication 3, **caractérisée par le fait que** le premier (50) et le deuxième (51) logements sont séparés par une paroi (53) assurant un blindage électromagnétique entre les deux logements (50, 51).

5. Fiche selon la revendication 3 ou 4, **caractérisée par le fait que** le corps (5) est configuré pour être monté sur un câble optique (4) et sur un câble (48) autre qu'optique, notamment un câble de puissance, respectivement connectés au(x) contact(s) optique(s) (14) et au(x) contact(s) (52) autre(s) qu'optique de la fiche (2), notamment au(x) contact(s) de puissance.

6. Fiche selon la revendication 1 ou 2, **caractérisée par le fait que** le corps (5) comporte un unique logement à l'intérieur duquel est disposée une cartouche (60) portant le convertisseur optoélectronique (12) et au moins un contact (52) autre qu'optique, notamment un contact de puissance.

7. Fiche selon la revendication 6, **caractérisée par le fait qu'**il est configuré pour être monté sur un câble hybride (65) comportant au moins un conducteur optique (15) et au moins un conducteur (66) autre qu'optique, notamment un conducteur de puissance.

8. Ensemble de fiches (2, 2'), **caractérisé par le fait qu'**il comporte :
- une première fiche (2) selon l'une quelconque des revendications 1 à 7, et
- une deuxième fiche (2') autre qu'optique, notamment une fiche de puissance, ladite deuxième fiche (2') comportant un deuxième corps et au moins un contact autre optique, notamment un contact de puissance, le deuxième corps et le corps (5) de la première fiche (2) étant sensiblement de mêmes dimensions.

9. Système de connexion (1), **caractérisé par le fait qu'**il comporte :
- une fiche (2) selon l'une quelconque des revendications 1 à 7 et,
- une embase, associée à un panneau (20),
l'embase et la fiche (2) étant configurées de telle sorte que lorsque la fiche (2) et l'embase sont connectées, le convertisseur optoélectronique (12) reste au moins partiellement du côté du panneau (20) dans lequel s'étend la majeure partie de la fiche (2).

10. Système selon la revendication 9, **caractérisé par le fait que** la fiche (2) et l'embase sont configurées de manière à ce que le corps (5) de la fiche (2), un boîtier du convertisseur optoélectronique (12), le panneau (20), la tresse du ou des câbles (4) sur le(s)quel(s) la fiche (2) est montée et la sous-embase (23) connectée au convertisseur optoélectronique (12) soient à la masse lorsque la fiche (2) est connectée à l'embase.

11. Système selon la revendication 9 ou 10, **caractérisé par le fait que** l'embase comporte une sous-embase (55) configurée pour être connectée à au moins un contact (52) autre qu'optique, notamment un contact de puissance.

## Patentansprüche

1. Stecker (2), der dazu bestimmt ist, an ein Basisteil (3) angeschlossen zu sein, der den Anschluss an eine elektronische Vorrichtung (3) gestattet und dazu bestimmt ist, an mindestens einem Kabel (4) befestigt zu sein, das mindestens einen optischen Leiter (15) aufweist, wobei der Stecker (2) einen Körper (5) aufweist und **dadurch gekennzeichnet ist, dass** er mindestens einen optoelektronischen Wandler aufweist, der mit Anschlussmitteln (12) versehen ist, der in dem Körper (5) derart herausnehmbar und austauschbar angeordnet ist, dass er abgenommen oder in den Körper des Steckers eingeführt werden kann, ohne die Struktur des Körpers des Steckers und/oder die Verkabelung des Rests des Steckers zu ändern.

2. Stecker nach Anspruch 1, **dadurch gekennzeichnet, dass** er mindestens einen optischen Kontakt (14) aufweist, von dem ein Ende an einen optischen Leiter (15) des Kabels (4) angeschlossen ist und von dem ein anderes Ende an den optoelektronischen Wandler (12) angeschlossen ist.

3. Stecker nach einem der Ansprüche 1 oder 2, **dadurch gekennzeichnet, dass** der Körper (5) mindestens eine erste Aufnahme (50) aufweist, in der der optoelektronische Wandler (12) aufgenommen ist, und mindestens eine zweite Aufnahme (51), in der mindestens ein Kontakt (52) aufgenommen ist, der nicht optisch ist, insbesondere ein Leistungskontakt.

4. Stecker nach Anspruch 3, **dadurch gekennzeichnet, dass** die erste (50) und die zweite (51) Aufnahme durch eine Wand (53) getrennt ist, die eine elektromagnetische Abschirmung zwischen den zwei Aufnahmen (50, 51) sicherstellt.

5. Stecker nach Anspruch 3 oder 4, **dadurch gekennzeichnet, dass** der Körper (5) ausgelegt ist, an einem optischen Kabel (4) und einem Kabel (48), das nicht optisch ist, insbesondere einem Leistungskabel, befestigt zu sein, beziehungsweise an (einen) optische(n) Kontakt (e) (14) des Steckers und (einen) Kontakt (e) (52) des Steckers (2), die/der nicht optisch sind/ist, insbesondere (einen) Leistungskontakt(e), angeschlossen zu sein.

6. Stecker nach Anspruch 1 oder 2, **dadurch gekennzeichnet, dass** der Körper (5) eine einzige Aufnahme aufweist, innerhalb welcher eine Kartusche (60) angeordnet ist, die den optoelektronischen Wandler (12) und mindestens einen Kontakt (52) trägt, der nicht optisch ist, insbesondere einen Leistungskontakt.

7. Stecker nach Anspruch 6, **dadurch gekennzeichnet, dass** er ausgelegt ist, an einem Hybridkabel (65) befestigt zu sein, das mindestens einen optischen Leiter (15) und mindestens einen Leiter (66), der nicht optisch ist, insbesondere einen Leistungsleiter, aufweist.

8. Steckeranordnung (2, 2'), **dadurch gekennzeichnet, dass** sie Folgendes aufweist:
- einen ersten Stecker (2) nach einem der Ansprüche 1 bis 7, und
- einen zweiten Stecker (2'), der nicht optisch ist, insbesondere einen Leistungsstecker, wobei der zweite Stecker (2') einen zweiten Körper und mindestens einen Kontakt, der nicht optisch ist, insbesondere einen Leistungskontakt, aufweist, wobei der zweite Körper und der Körper (5) des ersten Steckers (2) im Wesentlichen dieselben Abmessungen aufweisen.

9. Anschlusssystem (1), **dadurch gekennzeichnet, dass** es Folgendes aufweist:
- einen Stecker (2) nach einem der Ansprüche 1 bis 7 und,
- ein Basisteil, das mit einer Platte (20) verbunden ist,
wobei das Basisteil und der Stecker (2) derart ausgelegt sind, dass, wenn der Stecker (2) und das Basisteil verbunden sind, der optoelektronische Wandler (12) zumindest teilweise auf der Seite der Platte (20) verbleibt, in der sich der Großteil des Steckers (2) erstreckt.

10. System nach Anspruch 9, **dadurch gekennzeichnet, dass** der Stecker (2) und das Basisteil derart ausgelegt sind, dass der Körper (5) des Steckers (2), ein Gehäuse des optoelektronischen Wandlers (12), die Platte (20), das Geflecht des oder der Kabel (4), auf dem/denen der Stecker (2) befestigt ist, und das Unter-Basisteil (23), das an den optoelektronischen Wandler (12) angeschlossen ist, geerdet sind, wenn der Stecker (2) an das Basisteil angeschlossen ist.

11. System nach Anspruch 9 oder 10, **dadurch gekennzeichnet, dass** das Basisteil ein Unter-Basisteil (55) aufweist, das ausgelegt ist, an mindestens einen Kontakt (52), der nicht optisch ist, insbesondere einen Leistungskontakt, angeschlossen zu sein.

## Claims

1. A plug (2) intended to be connected to a receptacle (3) suitable for allowing the connection to an electronic equipment (3) and intended to be mounted on at least one cable (4) having at least one optical conductor (15), the plug (2) comprising a body (5) and being **characterized by** the fact that it comprises at least one optoelectronic converter provided with connection means (12), arranged inside the body (5) in a manner that is removable and interchangeable, such it can be removed from or inserted into the body of the plug without modifying the structure of the body of the plug and/or the cabling of the remainder of the plug.

2. A plug according to claim 1, **characterized by** the fact that it includes at least one optical contact (14) having one end connected to an optical conductor (15) of the cable (4) and another end connected to the optoelectronic converter (12).

3. A plug according to claim 1 or 2, **characterized by** the fact that the body (15) includes at least a first housing (50) in which the optoelectronic converter (12) is received, and at least a second housing (51) in which at least one contact (52) other than an optical contact is received, in particular a power contact.

4. A plug according to claim 3, **characterized by** the fact that the first (50) and second (51) housings are separated by a wall (53) providing electromagnetic shielding between the two housings (50,51).

5. A plug according to claim 3 or 4, **characterized by** the fact that the body (5) is configured to be mounted on an optical cable (4) and on a cable (48) other than an optical cable, in particular a power cable, being respectively connected to the optical contact(s) (14) and to the contact(s) (52) other than optical contact(s) of the plug (2), in particular to the power contact(s).

6. A plug according to claim 1 or 2, **characterized by** the fact that the body (5) comprises a single housing within which there is arranged a cartridge (60) carrying the optoelectronic converter (12) and at least one contact (52) other than an optical contact, in particular a power contact.

7. A plug according to claim 6, **characterized by** the fact that it is configured to be mounted on a hybrid cable (65) including at least one optical conductor (15) and at least one conductor (66) other than an optical conductor, in particular a power conductor.

8. A set of plugs (2, 2'), **characterized by** the fact that it comprises:
- a first plug (2) according to anyone of claims 1 to 7; and
- a second plug (2') other than an optical plug, in particular a power plug, said second plug having a second body and at least one contact other than an optical contact, in particular a power contact, the second body and the body (5) of the first plug having substantially the same dimensions.

9. A connection system (1), **characterized by** the fact that it comprises:
• a plug (2) according to anyone of claims 1 to 7; and
• a receptacle, associated with a panel (20);
the receptacle and the plug (2) being configured in such a manner that when the plug (2) and the receptacle are connected together, the optoelectronic converter (12) remains at least in part beside the panel (20) in which the major portion of the plug (2) extends.

10. A system according to claim 9, **characterized by** the fact that the plug (2) and the receptacle are configured so that the body (5) of the plug (2), a casing of the optoelectronic converter (12), the panel (20), the braid of the cable(s) (4) on which the plug (2) is mounted, and the sub-receptacle (23) connected to the optoelectronic converter (12) are grounded when the plug (2) is connected to the receptacle.

11. A system according to claim 9 or 10, **characterized by** the fact that the receptacle comprises at least one sub-receptacle (55) suitable for being connected to at least one contact (52) other than an optical contact, in particular a power contact.
